# EUROPEAN PATENT SPECIFICATION

(11) **EP 2 311 541 B1**
(45) Date of publication and mention of the grant of the patent: **14.06.2017**
(21) Application number: 10176652.5
(22) Date of filing: 14.09.2010
(51) Int. Cl.: B01D 33/073, B01D 33/54, B01D 33/46, B01D 33/50

(54) **Drum-type filtration system for the separation of a liquid phase and a solid phase**
Trommelfiltersystem zur Fest-Flüssig-Trennung
Système de filtration de type tambour pour la séparation d'une phase liquide et d'une phase solide

(30) Priority: 21.09.2009 IT MO20090234
(43) Date of publication of application: 20.04.2011
(73) Proprietor: Tecnoforme S.P.A., 41030 Bomporto, Frazione Sorbara MO (IT)
(72) Inventor: Bernabiti, Maurizio, 41030, Bomporto MO (IT)
(74) Representative: Modiano, Micaela Nadia

(56) References cited:
- EP-A1- 0 569 911
- DE-A1- 4 213 200
- GB-A- 2 302 818
- US-A- 1 646 556
- US-A- 3 220 340

## Description

The present invention refers to a drum-type filtration system for the separation of a liquid phase and a solid phase, particularly for the treatment and recovery of a lubrorefrigerant fluid contaminated by processing swarf.

With particular, but not exclusive, reference to the machine tool sector, the use of lubrorefrigerant fluids is known, which make it possible to keep machine performance levels high and stable in the execution of processing to remove swarf. One of the functions performed by such fluids is that of facilitating the removal of the swarf which has formed in the cutting area towards suitable evacuation systems.

In order to permit the recirculation of the lubrorefrigerant fluid in the machine tool, it is necessary to provide filtration systems that are adapted to separate the fluid from the swarf.

Several known types of filtration systems exist and, in particular, there are systems which use drum-type filters.

Such filtration systems are basically constituted by a tank for collecting the swarf-contaminated fluid which is drained from the machine tool, by a conveyor belt for taking away the larger swarf which has a first section located at the discharge port of the machine tool and completely immersed in the fluid and a second, ascending section that comes out of the tank to remove the swarf, and by a filter comprised of a rotatable drum which is supported above the upper part of the first section of the conveyor belt, and partially immersed in the fluid collected in the tank.

The drum-type filter is basically constituted by a frame covered by a net to form a substantially cylindrical filtering body arranged with its longitudinal axis transversely to the direction of travel of the conveyor belt and having an opening at one end for the filtered fluid to drain out.

Self-contained means can be provided for rotary actuation, as disclosed in Italian patent no. 1,253,786 in the name of this same Applicant, i.e. a transmission system interposed between the filtration assembly and the conveyor belt for rotary actuation of the assembly by means of the motion of travel of the belt. The drum-type filter operates, therefore, partially immersed in the tank; the refrigerant fluid that laps against the drum-type filter passes through the meshes of the net from the outside to the inside of the drum, so as to achieve separation from the finer swarf, which stays caught on the outside wall formed by the net. The filtered lubrorefrigerant fluid that collects inside the drum-type filter drains from the opening formed at one of the ends of the filter, to be then recirculated to the machine tool.

This system, in addition, provides a system for washing the drum-type filter which consists in one or more nozzles arranged inside the filtering body and directed towards the net. The jets that come out of these nozzles detach the swarf that remains attached to the outside wall of the net, so that it does not compromise the efficiency of the treatment. During washing the swarf removed from the drum-type filter falls onto the conveyor belt below to be carried off together with the larger swarf which is evacuated directly by the belt itself.

This architecture of known filtration systems, however, is not without drawbacks in that it involves overall system encumbrances, in terms of both length and height, which are such as to penalise the possibility of its use depending on the height of the lubrorefrigerant fluid discharge port on the machine tool and which complicate the installation of such systems in existing processing lines, which have limited space.

Moreover, this deployment entails the fact that the filtering body is only partially immersed in the fluid to be treated, with considerable reduction in the flow of filtered fluid.

In order to reduce the vertical encumbrance of the systems and to increase the degree of immersion of the drum-type filter, one known technique is to install the drum-type filter interposed between the upper and lower parts of the conveyor belt, in the connecting area between the first section and the ascending section.

However, both of these known solutions locate the drum-type filter at the conveyor belt, above the upper or lower part thereof. This system architecture constrains the processing capacity of the conveyor belt and of the drum-like filter, the length of which cannot be greater than the transversal width of the belt, and it involves the risk of accumulation of swarf against the outside wall of the filter if the lubrorefrigerant fluid to be treated is contaminated with floating swarf, such as that obtained from the processing of aluminium alloys.

These drawbacks are, at least in part, overcome by a second type of known system which provides, essentially, a first tank for draining the lubrorefrigerant fluid to be treated in which a principal conveyor belt is located to remove the larger swarf of the type described above and a second tank, connected to the first, in which a drum-type filter of the type described above is arranged in combination with a supplementary conveyor for removing the swarf removed from the outside wall of the filtering body during washing.

The second tank can be located, for example, next to the first with the supplementary conveyor parallel to the main belt, i.e. at the end of the first tank which is located under the second section of the main conveyor belt, with the supplementary conveyor arranged transversely with respect to the main belt.

These solutions too, however, are not without drawbacks since, in order to collect and remove the swarf removed from the drum-type filter during washing, it is necessary to provide a supplementary conveyor with consequent structural complication and increase in costs both of production, and of maintenance.

Moreover, according to this solution too, the filtering body operates only partially immersed in the fluid to be treated, with considerable reduction in the flow of filtered fluid.

It is also worth noting that in this case, the filtered flow is limited by the characteristics of the supplementary conveyor, in that the longitudinal extension of the drum-type filter, and therefore its filtering capacity, is constrained by the conformation of the supplementary conveyor that has to collect the swarf during washing.

Document US 1 646 556 B discloses a strainer for sugar juices with a filter drum and solid scraper system that removes the solids separated from the liquid.

A rotating drum suction filter for filtering contaminants from a cooling liquid, which in specific embodiments is provided with dirt removal conveyor and solid scrapper, is known from GB 2 302 818 A.

A liquid filter for cooling, lubricant or working fluids with rotating filter drum and scrapers actuated by a chain element, is known from DE 42 13 200 A1.

The aim of the present invention is to eliminate the above drawbacks of the known art, by devising a drum-type filtration system for the separation of a liquid phase and a solid phase which, for the same filtered capacity, minimizes encumbrances and which does not require the presence of a conveyor that cooperates with the filtration assembly during washing.

Within this aim, an object of the present invention is to increase the level of immersion of the filtration assembly for the same vertical encumbrance, so as to optimise the filtration yield by increasing the capacity/encumbrance ratio.

A further object of the present invention is to offer high performance levels in terms of constancy of filtration capacity, filtered capacity and degree of filtration obtained.

Another object of the present invention is to provide an optimised system of seals that maximises the efficiency of filtration.

A still further object of the present invention is to offer reduced encumbrances and to be, therefore, suited for flexible use.

Another object of the present invention is to provide a structure that is adapted to facilitate maintenance activities.

Another object of the present invention is to provide a simple structure, that is easy and practical to implement, safe to use and effective in operation, and has low costs.

This aim and these and other objects which will become better apparent hereinafter are achieved by the present drum-type filtration system for the separation of a liquid phase and a solid phase according to the invention, that has the features set forth in claim 1.

Further characteristics and advantages of the present invention will become better apparent from the following detailed description of a preferred, but not exclusive, embodiment of a drum-type filtration system for the separation of a liquid phase and a solid phase, illustrated by way of a non-limiting example in the accompanying drawings, wherein:

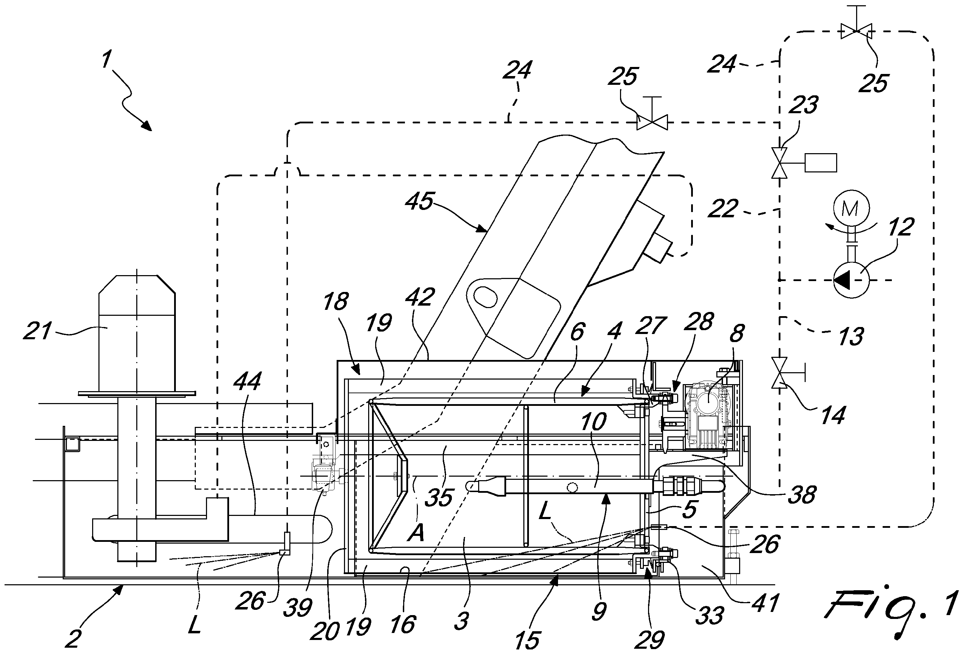

Figure 1 is a schematic and partial side elevation view of the system according to the invention;

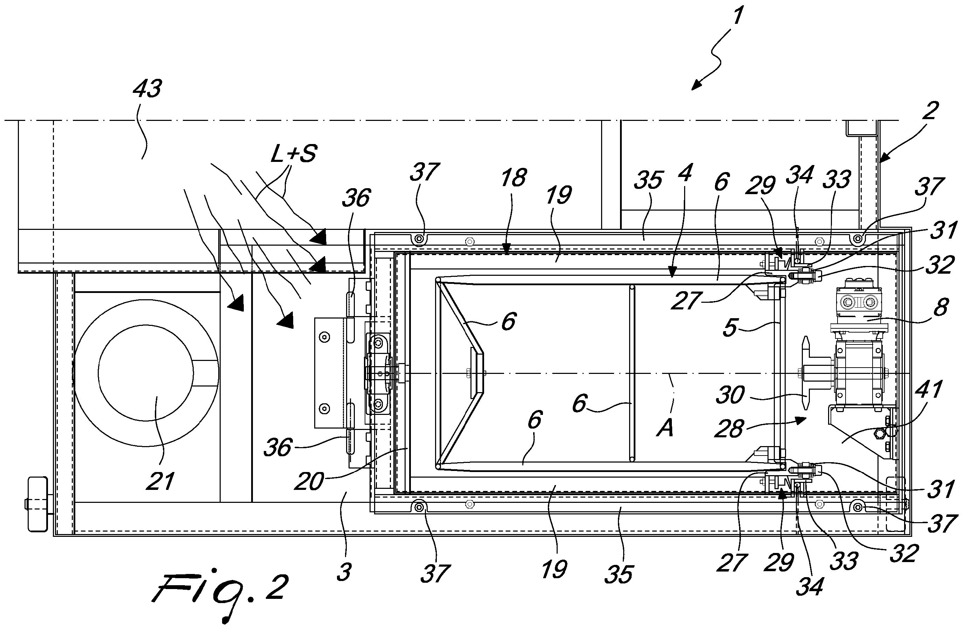

Figure 2 is a schematic plan view of a portion of the system in Figure 1 relating to the first tank;
Figure 3 is a schematic front view of Figure 2;
Figure 4 is a partially sectional schematic front view of the first tank of the system according to the invention and of the associated components;

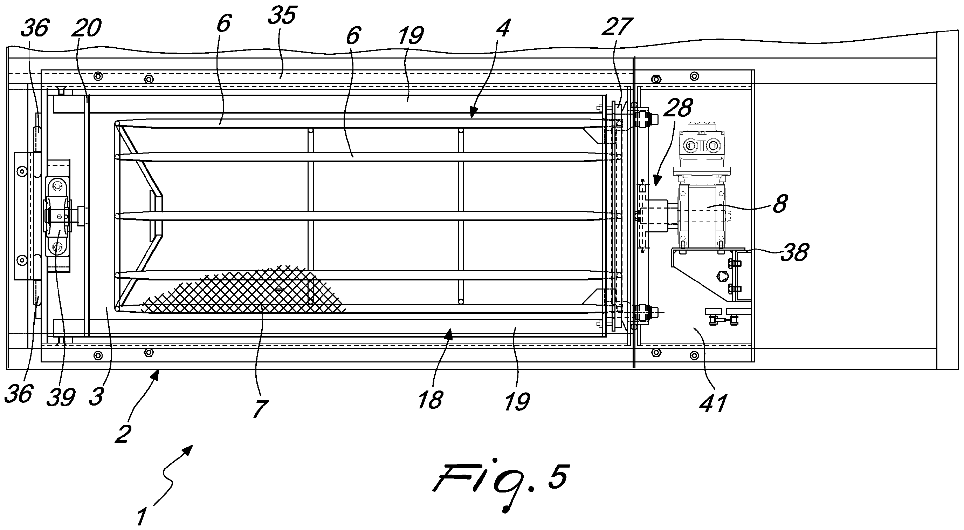

Figure 5 is a schematic plan view of the first tank of the system according to the invention and of the associated components;

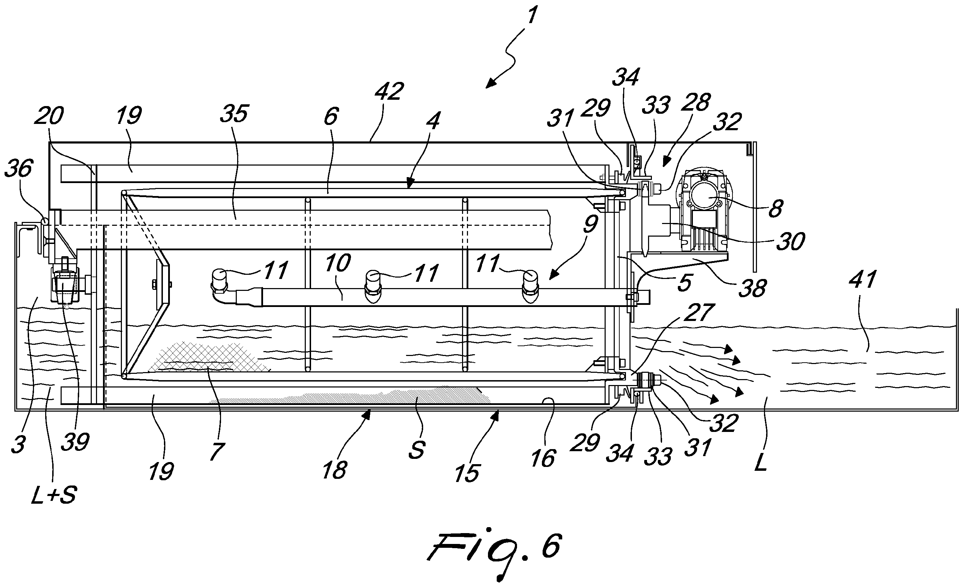

Figure 6 is a partially sectional schematic end view of the first tank of the system according to the invention and of the associated components;

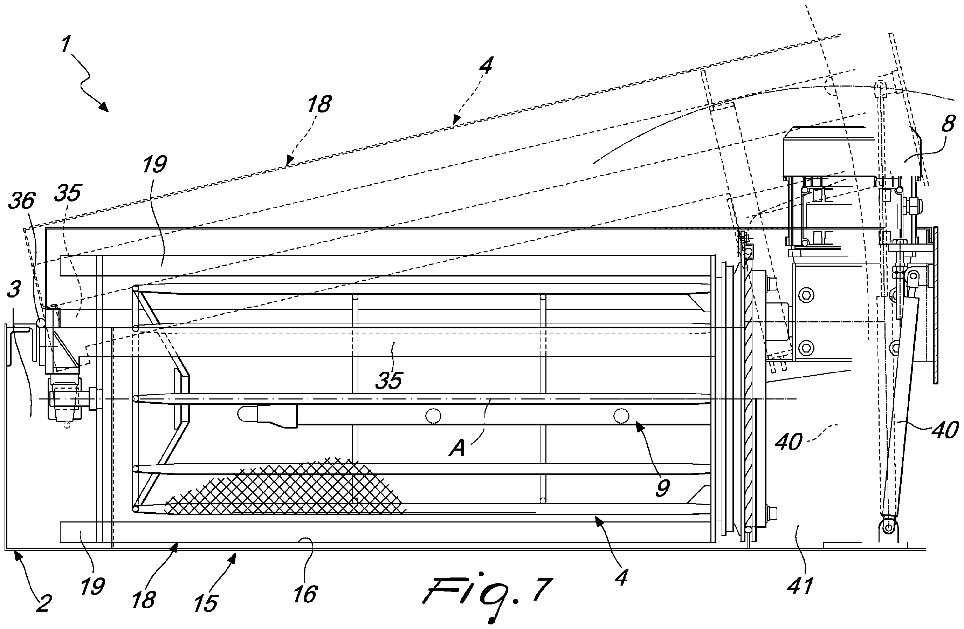

Figure 7 is a schematic view like Figure 6 which shows the tilting of the components accommodated in the first tank.

With reference to the figures, the reference numeral 1 generally indicates a drum-type filtration system for the separation of a liquid phase and a solid phase.

The system 1 is provided with a frame 2 which forms at least one tank 3 for collecting a mixture of a liquid phase L and a solid phase S to be separated for the recovery and/or disposal of at least one of the two.

The system 1 can be applied, for example, in the separation of the liquid phase L to be reused from the solid phase S to be disposed of or vice versa. One example of application of the system 1 is for the treatment of lubrorefrigerant fluids (liquid phase) contaminated by swarf (solid phase), which need to be filtered in order to be recirculated in the machine tools.

The system 1 provides, moreover, a drum-type filtering assembly 4 which is supported by the frame 2 so that it can rotate about its own longitudinal axis A and is at least partially immersed in the first tank 3. The filtering assembly 4 is adapted to retain on its outside the solid phase S, whereas inside it the liquid phase L evacuated through at least one discharge port 5 formed at an end face is collected.

The filtering assembly 4 is basically constituted by a framework 6 that defines a substantially cylindrical body and is covered by a filtering net jacket 7. The size of the mesh of the net 7 defines the size of the granules of the solid phase S that can be retained and, therefore, the degree of filtration that can be obtained. At one end, the framework 6 is open to form the discharge port 5, which is not covered by the net 7.

The system 1 is provided with means 8 for rotary actuation of the filtering assembly 4 about its own longitudinal axis A. Advantageously the actuation means 8 are preferably constituted by a motor or by a pneumatic gear motor which is dedicated to the movement of the filtering assembly 4. The actuation means are arranged at the open end of the framework 6.

The system 1 is also provided with means 9 for washing the filtering assembly 4, which are accommodated at least partially inside it and act against the current, i.e. outwards, to remove the solid phase S retained out of the filtering assembly.

In particular, the washing means 9 are constituted by a conduit 10 that is partially inserted, in the axial direction, in the filtering assembly 4 through the discharge port 5 and is provided with a plurality of washing nozzles 11 which are arranged on the longitudinal axis A and directed radially towards the net 7.

The conduit 10 is fed with pure liquid phase L, filtered by the filtering assembly 4 and recirculated by means of a pump 12. The feed line 13 of the washing means 9 is sectionalised by a first valve 14 so as to permit the adjustment of the washing flow.

The system 1 is provided, lastly, with means 15 for collecting and evacuating the solid phase S removed from the filtering assembly 4 during washing.

The collection and evacuation means 15 comprise at least one wall 16 which is shaped to form a substantially cylindrical surface with an axis of symmetry parallel to the longitudinal axis A, which is arranged inside the first tank 3, below the filtering assembly 4 and with the concavity facing upwards for the depositing of the solid phase S removed during washing.

The collection and evacuation means 15 include, also, at least one rectilinear channel 17 for collecting the solid phase S removed from the filtering assembly 4 during washing, which is arranged substantially parallel to the longitudinal axis A in proximity to one side of the wall 16, and preferably adjacent to it.

It is also possible to have two channels 17 arranged adjacent to the wall 16 on opposite sides and, possibly, at different heights.

Then, the collection and evacuation means 15 are provided with means 18 for scraping the wall 16, which are supported outside the filtering assembly 4 and can move in rotation about the axis of symmetry. Such scraper means 18 are adapted to transfer the solid phase S deposited on the wall 16 into the channel 17.

The scraper means 18 include at least one pusher 19 which has an elongated shape and is arranged parallel to the axis of symmetry and which is dragged in rotation proximate to the wall 16.

In particular, it should be noted that the pusher 19 has a cross-section in the shape of an isosceles triangle and is arranged with the bottom face lying radially with respect to the axis of symmetry and with the vertex in a rearward position with respect to the direction of rotation R imposed on the scraper means 18, in such a way that during rotation the bottom face makes contact with the solid phase S deposited on the wall 16, pushing it towards the channel 17. This conformation of the pusher 19, in addition to giving it the necessary mechanical resistance, prevents the solid phase S from adhering to it and obstructing the passage of the liquid phase L during washing of the net 7, thus making possible an adequate cleaning thereof, also at the pusher 19.

Preferably, the scraper means 18 have at least two pushers 19 which are distributed on a portion of the peripheral region of the filtering assembly 4 which has an angular extension of no more than 180° so as to facilitate the dismantling of the filtering assembly 4 as will be explained below.

In the specific embodiment shown, the scraper means 18 have three pushers 19 which are distributed over an arc of circumference of 180° and which are spaced 90° apart from each other, which are rendered mutually integral by a stiffening plate 20 that is arranged outside and facing the end of the filtering assembly 4 opposite the discharge port 5.

The reduced vertical encumbrance of the collection and evacuation means 15 makes it possible to position the filtering assembly 4 in proximity to the bottom of the first tank 3, thus maximising the flow of the filtered liquid phase L with the same vertical encumbrance as in known systems, i.e. significantly reducing the vertical encumbrance for the same filtration capacity. The filtering assembly 4 could, in fact, also operate completely immersed in the mix of liquid phase L and solid phase S to be separated.

Also, the means 15 for collecting and evacuating the solid phase S removed from the filtering assembly 4 during washing comprise means of extraction of the solid phase S collected in the channel 17.

In the embodiment shown, these extraction means comprise a circuit for recirculation of a portion of the liquid phase L separated by the filtering assembly to be injected at the channel 17 so as to push and direct the solid phase S collected therein towards means 21 for removing the same from the first tank 3.

More specifically, this circuit has a main portion 22 which is fed by the same pump 12 that feeds the washing means 9, which is intercepted by a solenoid valve 23 and branches, downstream of the above-mentioned solenoid valve, into a pair of secondary portions 24, which are in turn intercepted by respective second valves 25 and which end in respective jets 26 distributed along the channel 17.

However, different embodiments of this recirculation circuit are not excluded which, for example, make it autonomous with respect to the circuit for feeding the washing means 9.

Moreover, the removal means 21 consist in a pump for aspirating the solid phase S collected along the channel 17, the intake of which is connected in proximity to that end of the channel towards which the jets 26 push the solid phase.

However, alternative embodiments are not excluded for actuation of the extraction means which involve the use of other systems of a known type for transferring the solid phase S, such as, for example, a screw.

According to the preferred embodiment shown in the figures, the axis of symmetry of the cylindrical portion of the wall 16 and the longitudinal axis A of the filtering assembly 4 mutually coincide; this portion of the wall 16 is therefore coaxial with the framework 6. In this way the scraper means 18 can be made integral in rotation with the filtering assembly 4 about the longitudinal axis A.

In particular, there is an annular flange 27 for supporting the filtering assembly 4 and the scraper means 18, which is arranged outside and facing the filtering assembly at the end face that is provided with the discharge port 5, and transmission means 28 interposed between the flange and the actuation means 8.

It should be noted that the annular conformation of the flange 27 makes it possible not to obstruct the discharge port 5 and not to interfere with the washing means 9.

Fixed to the flange 27 is the framework 6, at the end face that is provided with the discharge port 5, and also the pushers 19, at the respective ends opposite to those associated with the plate 20.

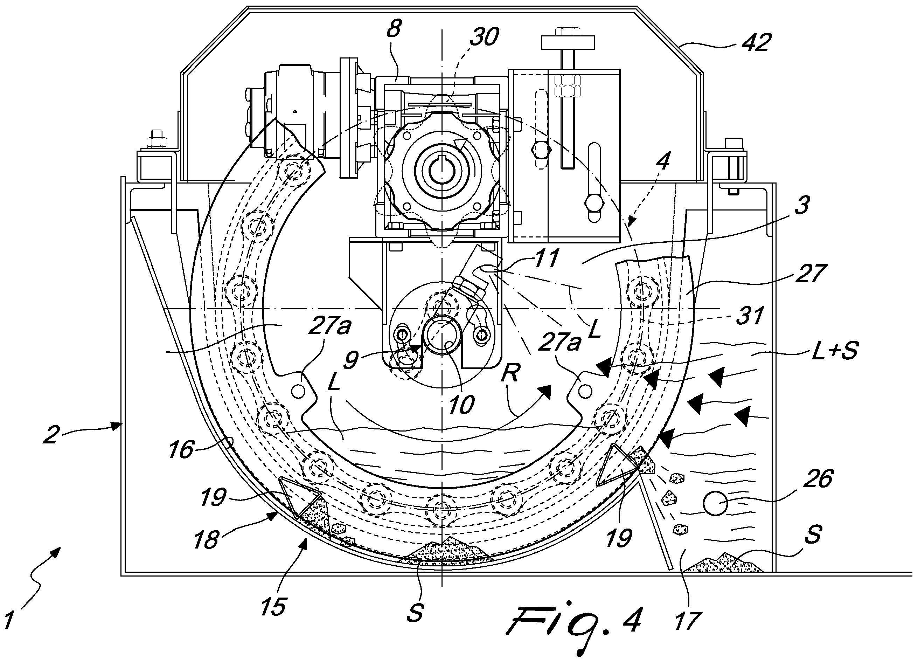

The flange 27, in particular, is provided with three portions 27a, only two of which can be seen in figure 4, protruding radially towards the inside and angularly and mutually spaced by 120° for connection by means of threaded elements, not described in detail, with the framework 6. This conformation makes it possible to reduce the radial encumbrance of the flange 27.

The filtering assembly 4, the scraper means 18 and the flange 27 constitute, therefore, an integral assembly that rotates about the longitudinal axis A.

The transmission means 28 comprise a sprocket 30, which is fitted onto the drive shaft of the actuation means 8 that lies in a position parallel to the longitudinal axis A and is meshed with a chain 31, which is of the type with perforated pins and protruding rollers, closed in a loop and fixed to the flange 27 by means of screws 32.

Advisably, there is an annular track 33 for guiding the sliding of the chain 31, upon which the rollers that constitute the chain roll.

The flange 27 is provided, along its external peripheral region, with elements 29 for sealing against the track 33 to prevent the transit of the solid phase S out of the first tank 3. In particular, these sealing elements 29 can have a seal ring of the V Ring (also known as "lip-ring") type, pressed against the track 33 by a respective presser ring.

It should be noted that the conformation of the transmission means 28 is also such as to minimise the radial encumbrance, in order to not obstruct the discharge port 5 and to not interfere with the washing means 9.

Advantageously, the filtering assembly 4 is associated with the first tank 3 so that it can oscillate about a pivoting axis which lies transversely to the longitudinal axis A due to the interposition of a structure 35 for supporting the assembly, together with the actuation means 8, the washing means 9 and the scraper means 18.

The support structure 35 has a form of bezel which is arranged resting on the frame 2, connected to it for pivoting by means of the hinge 36 and temporarily and rigidly connected by means of removable screws 37.

The support structure 35 bears the actuation means 8 which, by means of a bracket 38, hold up the washing means 9. Specifically, the bracket 38 supports the end of the conduit 10 that protrudes from the discharge port 5.

In addition, the support structure 35 is integral with the track 33 for supporting the chain 31 which is integral with the flange 27, which bears the filtering assembly and the scraper means 18. Between the support structure 35 and the track 33, a seal packing 34 is interposed.

In addition, there is an oscillating bearing 39 interposed between the plate 20 and the support structure 35 at the longitudinal axis A for rotational support of the assembly constituted by the flange 27, the filtering assembly 4 and the scraper means 18, as well as for retention of the axial position thereof.

The support structure 35, together with the track 33 and with the oscillating bearing 39, performs the function of "support stand", thus succeeding in ensuring, over time, the reliability of rotation of the filtering assembly 4 even in the presence of the solid phase S and with construction tolerances of the components that are relatively wide.

Once the screws 37 have been removed, the tilting of the block constituted by the support structure 35, the filtering assembly 4, the scraper means 18, the washing means 9, the actuation means 8, the transmission means 28, the flange 27 and the plate 20 can be actuated by means of a gas-assisted spring 40, or any other actuator, interposed between the frame 2 and the support structure itself.

The system 1 includes, finally, a second tank 41 for collecting the liquid phase L separated by the filtering assembly 4, which is in communication with the discharge port 5 and isolated from the first tank 3, as well as a cover 42 for protection and safety, positioned above the tanks 3 and 41.

The pump 12 draws, therefore, from the second tank 41.

In a possible embodiment, the system 1 can be constituted only by the elements described up to this point.

However, in the embodiment shown, what has been described so far constitutes the pre-filtration section of a system that comprises subsequent phases of filtration, in particular for the filtration of lubrorefrigerant fluids for machine tools contaminated by metallic swarf.

The frame 2 includes, therefore, a third tank 43 which is in communication with the first tank 3 by means of an opening 44. In the third tank 43 there is a conveyor belt 45 that is at least partially immersed in the bath of the liquid phase L and solid phase S mixed together, and which cooperates in the removal of the coarser solid phase S.

The conveyor belt 45 is not described in detail since it is of the type that is conventionally used in filtration.

If the conveyor belt 45 is of the self-cleaning type, then the delivery outlet of the aspiration pump 21 can be associated in a lower region with the lower portion of the conveyor belt.

It should be noted that, in operation, the pre-filtration section that includes the filtering assembly 4 is entirely independent of the conveyor belt 45 and therefore, the positioning of this section, too, is in no way constrained by the orientation of the conveyor belt.

The operation of the present invention is as follows.

In the filtration phase the system 1 operates in a basically conventional manner.

It should, however, be noted that by delay-timing the operation of the conveyor belt 45, the sedimentation of the solid phase on the belt can be obtained (known as the "filter cake effect"), so as to obtain a further pre-filtration before the mix of the liquid phase L and the solid phase S enters the first tank 3.

This aspect makes it possible to considerably increase the yield of the system 1 if a fine or, possibly, floating solid phase S is being treated.

During washing of the filtering assembly 4, however, the nozzles 11, which hose the net 7 from the inside out with the liquid phase L, are supplied so as to remove the solid phase S retained outside the net.

The solid phase S removed is deposited on the wall 16.

Keeping the assembly constituted by the flange 27, the filtering assembly 4 and the scraper means 18 actuated in rotation while the net 7 is washed by the nozzles 11, the pushers 19 transfer the solid phase S deposited on the wall 16 into the channel 17.

The action of the jets 26 directs the solid phase S collected along the channel towards the intake of the aspiration pump 21, in such a way as to evacuate the solid phase S separated by the filtering assembly 4 from the first tank 3.

Moreover, for maintenance activities it is possible, after removing the cover 42 and the screws 37, to actuate the tilting of the support structure 35 and of the elements associated with it by means of the gas-assisted spring 40 in order to facilitate access to the parts on which work is required.

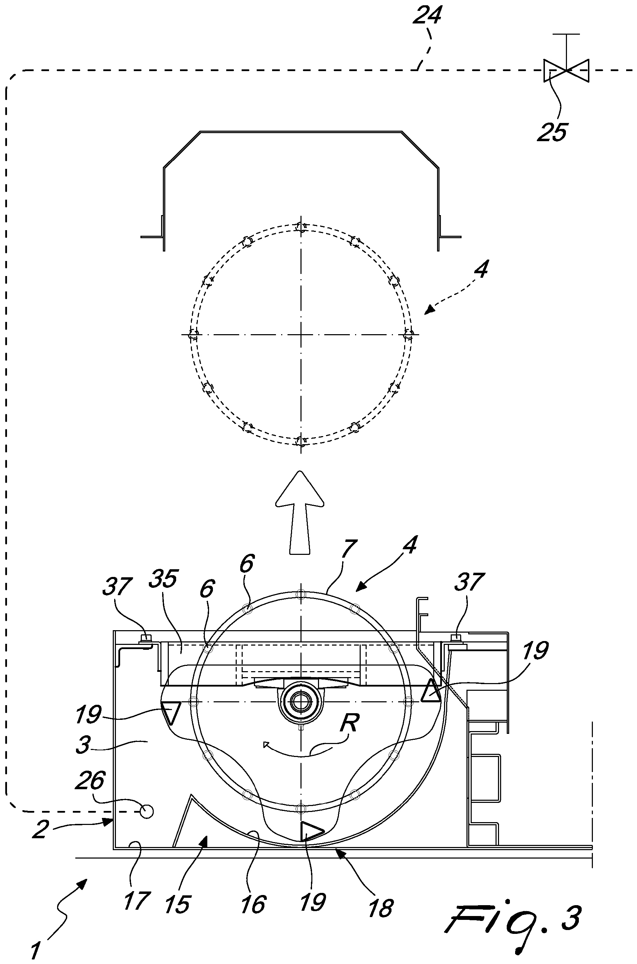

Also, to carry out the replacement of the net 7 or other work on the filtering assembly 4 it is possible to remove the cover 42 and the washing means 9, stop the actuation means 8 so that the scraper means 18 are arranged as in figure 3, loosen the screws fixing the framework 6 to the flange 27 and, then, vertically extract the filtering assembly 4.

In practice it has been found that the invention as described achieves the set aim and objects and specifically, particular attention is drawn to the fact that the system according to the invention provides a system for cleaning the filtering assembly that is autonomous and independent of any conveyor belts.

Moreover, the system according to the invention makes it possible to maximize the filtration yield and to facilitate maintenance activities.

The invention thus conceived is susceptible of numerous modifications and variations, all of which are within the scope of the appended claims.

In addition, all the details can be replaced by other technically equivalent elements.

In practice the materials employed, as well as the contingent dimensions and shapes, may be any according to requirements, but without for this reason leaving the scope of protection of the appended claims.

The disclosures in Italian Patent Application No. MO2009A000234 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A drum-type filtration system (1) for the separation of a liquid phase and a solid phase, comprising:
- a frame (2), which forms at least one first tank (3) for collecting a mixture of a liquid phase (L) and a solid phase (S) to be separated;
- a drum-type filtering assembly (4), which is supported by said frame (2) so that it can rotate about its own longitudinal axis (A) and is at least partially immersed in said first tank (3), which is adapted to retain on its outside the solid phase (S) and inside which the liquid phase (L) evacuated through at least one discharge port (5) formed at an end face is collected;
- means (8) for rotary actuation of said filtering assembly (4) about its own longitudinal axis (A);
- means (9) for washing said filtering assembly (4), which are arranged at least partially inside it and operate outward to remove the solid phase (S) retained outside said filtering assembly;
- means (15) for collecting and evacuating the solid phase (S) removed from said filtering assembly (4) during washing;
and wherein said collection and evacuation means (15) comprise at least one wall (16), which is contoured so as to form a substantially cylindrical portion whose axis of symmetry is parallel to the longitudinal axis (A) of said filtering assembly (4), which is arranged inside said first tank (3) and below said filtering assembly for the deposit of the solid phase (S) removed during washing, at least one channel (17) for collecting the solid phase (S) arranged substantially parallel to the longitudinal axis (A) of said filtering assembly (4) and proximate to said wall (16), means (18) which scrape said wall (16), are supported outside said filtering assembly (4), can move so as to rotate about said axis of symmetry, and are adapted to transfer the solid phase (S) deposited on said wall into said channel (17), and means (12, 21, 22, 23, 24, 25, 26) for extracting said solid phase (S) from said channel (17),
**characterized in that** said frame (2) comprises a second tank (41) for collecting the liquid phase (L) separated by said filtering assembly (4), which is connected to said discharge port (5) and isolated from said first tank (3) and a third tank (43), which is connected to said first tank (3) and in which at least one conveyor belt (45) is accommodated which is at least partially immersed and cooperates in removing the solid phase (S), said filtering assembly (4) being included in a pre-filtration section that is entirely independent of said conveyor belt (45), the conveyor belt (45) being suitable for delay-timing operation for sedimentation of solid phase (S) thereon and further pre-filtration before the mixture of liquid (L) and solid (S) phases enters said first tank.

2. The system (1) according to claim 1, **characterized in that** said scraper means (18) comprise at least one pusher (19), which has an elongated shape and is arranged parallel to the longitudinal axis (A) of said filtering assembly (4).

3. The system (1) according to claim 2, **characterized in that** said pusher (19) has a transverse cross-section that is substantially triangular and is arranged with one face lying radially with respect to said axis of symmetry.

4. The system (1) according to claim 2 or 3, **characterized in that** said scraper means (18) comprise at least two of said pushers (19), which are distributed on a portion of the peripheral region of said filtering assembly (4) which has an extension of no more than 180°.

5. The system (1) according to one or more of the preceding claims, **characterized in that** said axis of symmetry and said longitudinal axis (A) coincide.

6. The system (1) according to claim 5, **characterized in that** said scraper means (18) are associated with said filtering assembly (4) and are jointly connected for rotation about said longitudinal axis (A).

7. The system (1) according to claim 6, **characterized in that** it comprises an annular flange (27) for supporting said filtering assembly (4) and said scraper means (18), which is arranged at the end face of said filtering assembly (4) provided with said discharge port (5) and transmission means (28) which are interposed between said actuation means (8) and said flange (27) for the rotary actuation about said longitudinal axis (A) of said filtering assembly (4) and of said scraper means (18).

8. The system (1) according to one or more of the preceding claims, **characterized in that** said filtering assembly (4) is associated with said first tank (3) so that it can oscillate about a pivoting axis which lies transversely to said longitudinal axis (A) due to the interposition of a structure (35) for supporting said assembly, together with said washing means (9), said scraper means (18) and said actuation means (8).

9. The system (1) according to claims 7 and 8, **characterized in that** said transmission means (28) comprise a sprocket (30) associated with the actuation means (8) and a chain (31) which is closed in a loop and is jointly connected to said flange (27), which engages said sprocket, and **in that** said supporting structure (35) is associated with an annular track (33) for guiding the rotation of said chain (31) and with an oscillating bearing (39) for rotational support and axial retention of said filtering assembly (4) and of said scraper means (18).

10. The system (1) according to one or more of the preceding claims, **characterized in that** said extraction means comprise a circuit (12, 22, 23, 24, 25, 26) for recirculation of a portion of the liquid phase (L) separated by said filtering assembly (4) to be injected at said channel (17) so as to push and direct the solid phase (S) collected therein toward means (21) for removing said solid phase from said first tank (3).

11. The system (1) according to claim 10, **characterized in that** said removal means (21) comprise a pump for aspirating the solid phase, whose intake is connected to said channel (17) and whose delivery is associated in a downward region with the lower portion of said conveyor belt (45), the conveyor belt being of the self-cleaning type.

## Patentansprüche

1. Ein Trommelfiltersystem (1) zur Fest-Flüssig-Trennung, das Folgendes umfasst:
- einen Rahmen (2), der mindestens einen ersten Tank (3) zum Sammeln einer Mischung aus einer flüssigen Phase (L) und einer festen Phase (S) bildet, die getrennt werden sollen;
- einen Trommelfilteraufbau (4), der von dem Rahmen (2) so getragen wird, dass er sich um seine eigene Längsachse (A) drehen kann, und zumindest teilweise in den ersten Tank (3) eingetaucht ist, der ausgebildet ist, um an seiner Außenseite die feste Phase (S) zu halten, und in dem die flüssige Phase (L), abgeleitet durch mindestens eine Ablassöffnung (5), die an einer Stirnfläche geformt ist, gesammelt wird;
- Mittel (8) für den Drehantrieb des Filteraufbaus (4) um seine eigene Längsachse (A);
- Mittel (9) zum Waschen des Filteraufbaus (4), die zumindest teilweise in ihm angeordnet sind und nach außen wirken, um die feste Phase (S), die außerhalb des Filteraufbaus gehalten wird, zu entfernen;
- Mittel (15) zum Sammeln und Austragen der festen Phase (S), die während des Waschens aus dem Filteraufbau (4) entfernt wurde;
und wobei die Sammel- und Austragmittel (15) mindestens eine Wand (16) umfassen, die konturiert ist, um einen im Wesentlichen zylindrischen Abschnitt zu bilden, dessen Symmetrieachse parallel zur Längsachse (A) des Filteraufbaus (4) ist, die innerhalb des ersten Tanks (3) und unterhalb des Filteraufbaus angeordnet ist, für die Ablagerung der festen Phase (S), die während des Waschens entfernt wurde; mindestens einen Kanal (17) zum Sammeln der festen Phase (S), angeordnet im Wesentlichen parallel zur Längsachse (A) des Filteraufbaus (4) und angrenzend an die Wand (16), Mittel (18), die die Wand (16) abschaben, außerhalb des Filteraufbaus (4) angeordnet sind, sich bewegen können, um sich um die Symmetrieachse zu drehen, und ausgebildet sind, um die feste Phase (S), die sich an der Wand abgelagert hat, in den Kanal (17) zu befördern, und Mittel (12, 21, 22, 23, 24, 25, 26) zum Extrahieren der festen Phase (S) aus dem Kanal (17),
**dadurch gekennzeichnet, dass** der Rahmen (2) einen zweiten Tank (41) zum Sammeln der flüssigen Phase (L) umfasst, die durch den Filteraufbau (4) abgetrennt wurde; der mit der Ablassöffnung (5) verbunden und gegenüber dem ersten Tank (3) isoliert ist, und einen dritten Tank (43), der mit dem ersten Tank (3) verbunden ist und in dem mindestens ein Förderband (45) untergebracht ist, das zumindest teilweise eingetaucht ist und beim Entfernen der festen Phase (S) mitwirkt, wobei der Filteraufbau (4) in einen Vorfilterabschnitt eingeschlossen ist, der vollständig unabhängig von dem Förderband (45) ist, wobei das Förderband (45) geeignet ist für den Verzögerungszeitbetrieb zur Sedimentation fester Phase (5) darauf und für weitere Vorfiltration, bevor die Mischung aus flüssiger (L) und fester (5) Phase in den ersten Tank eintritt.

2. Das System (1) gemäß Anspruch 1, **dadurch gekennzeichnet, dass** die Abschabemittel (18) mindestens einen Schieber (19) umfassen, der eine verlängerte Form hat und parallel zur Längsachse (A) des Filteraufbaus (4) angeordnet ist.

3. Das System (1) gemäß Anspruch 2, **dadurch gekennzeichnet, dass** der Schieber (19) einen transversalen Querschnitt hat, der im Wesentlichen dreieckig ist, und so angeordnet ist, dass eine Fläche radial zu der Symmetrieachse liegt.

4. Das System (1) gemäß Anspruch 2 oder 3, **dadurch gekennzeichnet, dass** die Abschabemittel (18) mindestens zwei der Schieber (19) umfassen, die auf einem Abschnitt des peripheren Bereichs des Filteraufbaus (4) verteilt sind, der eine Ausdehnung von nicht mehr als 180° hat.

5. Das System (1) gemäß einem oder mehreren der obigen Ansprüche, **dadurch gekennzeichnet, dass** die Symmetrieachse und die Längsachse (A) zusammenfallen.

6. Das System (1) gemäß Anspruch 5, **dadurch gekennzeichnet, dass** die Abschabemittel (18) mit dem Filteraufbau (4) verbunden und zur Drehung um die Längsachse (A) gemeinsam verbunden sind.

7. Das System (1) gemäß Anspruch 6, **dadurch gekennzeichnet, dass** es einen Ringflansch (27) zum Befestigen des Filteraufbaus (4) und der Abschabemittel (18) umfasst, der an der Stirnfläche des Filteraufbaus (4) angebracht ist, welche mit der Ablassöffnung (5) versehen ist, und Übertragungsmittel (28), die zwischen den Antriebsmitteln (8) und dem Flansch (27) angeordnet sind, für den Drehantrieb um die Längsachse (A) des Filteraufbaus (4) und der Abschabemittel (18).

8. System (1) gemäß einem oder mehreren der obigen Ansprüche, **dadurch gekennzeichnet, dass** der Filteraufbau (4) so mit dem ersten Tank (3) verbunden ist, dass er um eine Schwenkachse pendeln kann, die quer zu der Längsachse (A) liegt, aufgrund der Zwischenschaltung einer Struktur (35) zum Tragen des Aufbaus, gemeinsam mit den Waschungsmitteln (9), den Abschabemitteln (18) und den Antriebsmitteln (8).

9. Das System (1) gemäß den Ansprüchen 7 und 8, **dadurch gekennzeichnet, dass** die Übertragungsmittel (28) ein Zahnrad (30) umfassen, das mit den Antriebsmitteln (8) verbunden ist, und eine Kette (31), die in einer Schleife geschlossen und fest mit dem Flansch (27) verbunden ist, das in das Zahnrad eingreift, und dadurch, dass die tragende Struktur (35) mit einer Ringbahn (33) zum Führen der Drehung der Kette (31) und mit einem Pendellager (39) zur Drehstützung und zum axialen Halten des Filteraufbaus (4) und der Abschabemittel (18) verbunden ist.

10. System (1) gemäß einem oder mehreren der obigen Ansprüche, **dadurch gekennzeichnet, dass** die Extraktionsmittel einen Kreis (12, 22, 23, 24, 25, 26) zur Rückführung eines Teils der flüssigen Phase (L), die durch den Filteraufbau (4) abgetrennt wurde, in den Kreislauf umfasst, einzuspritzen an den Kanal (17), um die feste Phase (S), die sich darin gesammelt hat, zu Mitteln (21) zum Entfernen der festen Phase aus dem ersten Tank (3) hin zu schieben und zu lenken.

11. System (1) gemäß Anspruch 10, **dadurch gekennzeichnet, dass** die Entfernungsmittel (21) eine Pumpe zum Ansaugen der festen Phase umfassen, deren Einlass mit dem Kanal (17) verbunden ist und deren Auslass in einem unteren Bereich mit dem unteren Abschnitt des Förderbandes (45) verbunden ist, wobei das Förderband vom selbstreinigenden Typ ist.

## Revendications

1. Système de filtration de type tambour (1) pour la séparation d'une phase liquide et d'une phase solide, comportant :
- un châssis (2), qui forme au moins un premier réservoir (3) pour recueillir un mélange d'une phase liquide (L) et d'une phase solide (S) à séparer,
- un ensemble de filtrage de typa tambour (4), qui est supporté par ledit châssis (2) de sorte qu'il peut tourner autour de son axe longitudinal propre (A) et est au moins partiellement immergé dans ledit premier réservoir (3), qui est adapté pour retenir sur son extérieur la phase solide (S) et à l'intérieur duquel est recueillie la phase liquide (L) évacuée à travers au moins un orifice d'évacuation (5) formé sur une face d'extrémité,
- des moyens (8) pour un actionnement en rotation dudit ensemble de filtrage (4) autour de son axe longitudinal propre (A),
- des moyens (9) pour laver ledit ensemble de filtrage (4), qui sont agencés au moins partiellement à l'intérieur de celui-ci et opèrent vers l'extérieur pour retirer la phase solide (S) retenue à l'extérieur dudit ensemble de filtrage,
- des moyens (15) pour recueillir et évacuer la phase solide (S) retirée dudit ensemble de filtrage (4) pendant le lavage,
et dans lequel lesdits moyens de recueil et d'évacuation (15) comportent au moins une paroi (16), qui est profilée de manière à former une portion sensiblement cylindrique dont l'axe de symétrie est parallèle à l'axe longitudinal (A) dudit ensemble de filtrage (4), qui est agencé à l'intérieur dudit premier réservoir (3) et sous ledit ensemble de filtrage pour le dépôt de la phase solide (S) retirée pendant le lavage, au moins un canal (17) pour recueillir la phase solide (S) agencé sensiblement parallèle à l'axe longitudinal (A) dudit ensemble de filtrage (4) et à proximité de ladite paroi (16), des moyens (18) qui raclent ladite paroi (16), sont supportés à l'extérieur dudit ensemble de filtrage (4), peuvent bouger de manière à tourner autour dudit axe de symétrie, et sont adaptés pour transférer la phase solide (S) déposée sur ladite paroi dans ledit canal (17), et des moyens (12, 21, 22, 23, 24, 25, 26) pour extraire ladite phase solide (S) dudit canal (17),
**caractérisé en ce que** ledit châssis (2) comporte un deuxième réservoir (41) pour recueillir la phase liquide (L) séparée par ledit ensemble de filtrage (4), qui est relié audit orifice d'évacuation (5) et isolé dudit premier réservoir (3), et un troisième réservoir (43) qui est relié audit premier réservoir (3) et dans lequel au moins une bande de convoyage (45) est reçue qui est au moins partiellement immergée et coopère en retirant la phase solide (S), ledit ensemble de filtrage (4) étant inclus dans un tronçon de pré-filtration qui est entièrement indépendant de ladite bande de convoyage (45), la bande de convoyage (45) étant adaptée pour une opération de temporisation en vue d'une sédimentation de la phase solide (S) sur celle-ci et d'une pré-filtration supplémentaire avant que le mélange de phases liquide (L) et solide (S) entre dans ledit premier réservoir.

2. Système (1) selon la revendication 1, **caractérisé en ce que** lesdits moyens racleurs (18) comportent au moins un poussoir (19), qui a une forme allongée et est agencé parallèle à l'axe longitudinal (A) dudit ensemble de filtrage (4).

3. Système (1) selon la revendication 2, **caractérisé en ce que** ledit poussoir (19) a une section transversale qui est sensiblement triangulaire et est agencée avec une face située radialement par rapport audit axe de symétrie.

4. Système (1) selon la revendication 2 ou 3, **caractérisé en ce que** lesdits moyens racleurs (18) comportent au moins deux desdits poussoirs (19), qui sont répartis sur une portion de la région périphérique dudit ensemble de filtrage (4) qui a une extension non supérieure à 180°.

5. Système (1) selon une ou plusieurs des revendications précédentes, **caractérisé en ce que** ledit axe de symétrie et ledit axe longitudinal (A) coïncident.

6. Système (1) selon la revendication 5, **caractérisé en ce que** lesdits moyens racleurs (18) sont associés audit ensemble de filtrage (4) et sont conjointement reliés en vue d'une rotation autour dudit axe longitudinal (A).

7. Système (1) selon la revendication 6, **caractérisé en ce qu'**il comporte un rebord annulaire (27) pour supporter ledit ensemble de filtrage (4) et lesdits moyens racleurs (18), qui sont agencés sur la face d'extrémité dudit ensemble de filtrage (4) pourvu dudit orifice d'évacuation (5) et de moyens de transmission (28) qui sont interposés entre lesdits moyens d'actionnement (8) et ledit rebord (27) pour l'actionnement en rotation autour dudit axe longitudinal (A) dudit ensemble de filtrage (4) et desdits moyens racleurs (18).

8. Système (1) selon une ou plusieurs des revendications précédentes, **caractérisé en ce que** ledit ensemble de filtrage (4) est associé audit premier réservoir (3) de sorte qu'il peut osciller autour d'un axe de pivotement qui se situe transversalement par rapport audit axe longitudinal (A) en raison de l'interposition d'une structure (35) pour supporter ledit ensemble, en association avec lesdits moyens de lavage (9), lesdits moyens racleurs (18) et lesdits moyens d'actionnement (8).

9. Système (1) selon les revendications 7 et 8, **caractérisé en ce que** lesdits moyens de transmission (28) comportent un pignon (30) associé aux moyens d'actionnement (8) et une chaîne (31) qui est fermée dans une boucle et est conjointement reliée audit rebord (27), qui s'engrène avec ledit pignon, et **en ce que** ladite structure de support (35) est associée à une piste annulaire (33) pour guider la rotation de ladite chaîne (31) et avec un palier oscillant (39) pour un support rotatif et une retenue axiale dudit ensemble de filtrage (4) et desdits moyens racleurs (18).

10. Système (1) selon une ou plusieurs des revendications précédentes, **caractérisé en ce que** lesdits moyens d'extraction comportent un circuit (12, 22, 23, 24, 25, 26) pour une recirculation d'une portion de la phase liquide (L) séparée par ledit ensemble de filtrage (4) à injecter au niveau dudit canal (17) de manière à pousser et diriger la phase solide (S) recueillie dans celui-ci vers des moyens (21) pour retirer ladite phase solide dudit premier réservoir (3).

11. Système (1) selon la revendication 10, **caractérisé en ce que** lesdits moyens de retrait (21) comportent une pompe pour aspirer la phase solide, dont l'admission est reliée audit canal (17) et dont le refoulement est associé dans une région descendante à la portion inférieure de ladite bande de convoyage (45), la bande de convoyage étant du type auto-nettoyeur.
